# EUROPEAN PATENT SPECIFICATION

(11) **EP 3 135 126 B1**
(45) Date of publication and mention of the grant of the patent: **20.11.2024**
(21) Application number: 15782960.7
(22) Date of filing: 06.04.2015
(51) Int. Cl.: A23N 1/00, A23N 1/02, A47J 19/02

(54) **IMPROVEMENTS TO A JUICE EXTRACTOR MACHINE**
VERBESSERUNGEN AN EINER ENTSAFTERMASCHINE
AMÉLIORATIONS APPORTÉES À UNE MACHINE D'EXTRACTION DE JUS

(30) Priority: 22.04.2014 BR 1495942
(43) Date of publication of application: 01.03.2017
(73) Proprietor: Mendes, Carlos Neto, 14801-320 Araraquara - SP (BR)
(72) Inventor: Mendes, Carlos Neto, 14801-320 Araraquara - SP (BR)
(74) Representative: Patentree
(86) International application number: PCT/IB2015/052482
(87) International publication number: WO 2015/162512

(56) References cited:
- WO-A1-2008/035388
- BR-A- 8 904 555
- BR-A- 9 502 244
- BR-A- 9 600 402
- BR-A- 9 600 402
- BR-A2- PI0 717 050
- BR-U- 7 501 779
- BR-U- 7 502 994
- US-A- 2 723 618
- US-A- 3 086 455
- US-A- 5 199 348
- US-A1- 2005 028 690

## Description

### BRIEF INTRODUCTION

This application requests a Patent of Invention for improvements to a juice extraction machine, particularly an extremely compact commercial-scale fruit juice extraction machine, capable of being handled and transported very easily and which stands out for a differentiated constructive configuration that, among other items, for using a tilting basket at the front that, when completely closed, keeps its side walls close to the peeler cups and, when opened, facilitates the removal of peel and bagasse wastes. The invention also stands out for having arranged on the mobile peeler and connect thereto a fruit-rack, intended for receiving the fruit during the second stage (when the fruit is on the mobile peeler) with this rack having a smooth and slightly curved surface (with a broad radius), serving as a waiting stage for the fruit (before it falls in the peelers) without damaging the fruit and ensuring that it slides easily, in addition to significantly enhancing the efficiency of the machine, which is small compared to others, although highly productive.

### FIELD OF APPLICATION

Fruit juice extraction in the commercial sector.

### STATE OF THE ART

Since 1995, the inventor has devoted time and attention to the development of fruit juice extractors, filing the first patent application N° PI9502244-9 for a commercial-scale machine with the following characteristics: a machine developed for processing citrus fruit in general with no manual contact, comprised of a tubular chassis attached to an extraction compartment in which is installed the geared motor actuating a crankshaft that in turn axially displaces a peeler cup against another peeler cup in order to press the fruit released by a trigger located on a mouth of a fruit tray, there being a central shaft in one of the above-mentioned peeler cups and a perforation tube for juice extraction in the other, such that all solid wastes are discharged into a basket while the liquid runs through a filter, flowing sequentially through a tube in a horizontal "S" shape.

Within the line of research pursued by the inventor, the technology was improved and an application was filed under N° MU7501780-6 for the machine's feeding system, describing the steady supply into the machine in a synchronized manner through a feeding arm positioned transversely in the feeding mouth, preventing the fruit from passing, and as the mobile peeler cup moves towards the static, i.e fixed, peeler cup, there is a displacement of said arm allowing a fruit to fall into the container, and so on successively, such that, in each cycle a fruit falls directly into the peelers.

Progressing with the state of the art, this inventor filed an application under N° MU7502884-4, whose purpose was to improve the feeding system even more by introducing a fruit stirrer on the top tray and a new dispensing device provided with a helical spring placed transversely to the feeding mouth, allowing only one fruit to fall at a time.

Analyzing the indicated state of the art for the line of progression developed by this inventor, the first issue to be addressed with regard to PI9502244-9 is the shape and arrangement of the waste basket, as in the prior art it is located very far away from where the extraction occurs. Thus, bearing in mind that the fruit peel and bagasse are expelled randomly, in addition to the possibility that a piece of fruit may "burst", under these conditions the wastes stick to the walls of the machine until reaching the basket. Thus, to remove the wastes present inside the basked, it is necessary to remove the latter out of the machine. It is even harder to clean the walls surrounding the peelers, especially the walls placed between said peelers and said basket.

The second issue to be addressed consists of the so-called second stage of the fruit, which is when it is positioned over the mobile peeler, since, as it is formed by blades its outer shape does not favor the sliding of fruit during linear movement. In this context, another technical issue noted by the inventor relates to the fruit wastes, which are thrown towards the top part of the machine, as the peeler is hollow.

### THIS INVENTION

In order to solve the issue of the distance of the waste basket, the inventor designed a surrounding tilting basket that takes advantage not only of the distance factor but also of its constructive form. In this invention, the walls of the surrounding tilting basket are close to the peelers which, in addition to helping to solve the waste removal, also makes the machine very compact, yet highly productive. On the other hand, the side walls of the above-mentioned surrounding tilting basket have semicircular conformations, thus allowing a rotational displacement so that the waste can be very easily removed.

With regard to the second aspect addressed, that is, the fruit slipping over the mobile peeler, the inventor introduced a fruit-rack, such rack being positioned on the outer top face of the mobile peeler and having movements consistent with it. This means that the fruit rests on a smooth and more suitable surface, mainly due to its arched shape according to a much larger radius than that of the fruit itself, constituting a tubular structure that releases the fruit. This fruit-rack also serves as a deflector for waste, not allowing them to fly upwards in order to keep the top part of the machine clean.

In other words, when compared to the mentioned documents constituting the state of the art, the most relevant innovations in this invention are related to the parts of the machine configured after the dispenser or feeder device, considering the characteristic operating cycle of this type of juice extractor.

With this new machine, according to the invention, it may be said that the fruit goes through three stages, all synchronized by the mobile peeler movement. In the first stage, the fruit rests on the transverse spring, still inside the feeder; in the second stage, by the contact action of the spring release means during the linear movement of the mobile peeler towards the fixed peeler, the fruit falls on the fruit-rack being kept above the mobile peeler by the action of the transverse spring; in the third stage, the fruit falls between the fixed and mobile peelers, promoting the peeling of the fruit and the extraction of the juice itself almost simultaneously.

In more technical terms, in this invention, a helical transverse spring is arranged between the feeder tube and the fruit-rack set, which at first retains the fruit present in the (vertical) feeder, or dispenser (first stage), with the activation of this spring being done by means inserted in the above-mentioned fruit-rack set that is actuated by the same axle that moves the mobile peeler, such that the fruit waiting on the rounded fruit-rack constitutes the second stage, wherefrom such fruit will be released into the peeler set only when the fruit movement component (present on the fruit-rack set) touches such fruit during the linear movement, making it fall to the third stage, between the peelers, which is the act of peeling the fruit and extracting the juice simultaneously. In other words, in an almost simultaneous operation, the helical transverse spring is touched by the spring actuators, releasing the fruit lined up in the feeder to fall on the above-mentioned fruit-rack.

Thus, the fruit going through the dispenser falls on the top part of the mobile peeler and then on the inside of the peeler during the next cycle, when the juice is extracted. Assuming that the dispenser or feeder tube is full, at each cycle there will be one fruit in each of the mentioned stages.

### ADVANTAGES OF THE INVENTION

Among other advantages that are clear from the preceding description, the advantages rated as relevant to this invention may be listed as follows:
- Improved efficiency of synchronized fruit feeding considering the better sliding of the fruit on the fruit-rack during the second feeding stage;
- Less damage to the fruit, due to the shape and polished surface of the fruit-rack;
- Keeps the inside of the machine cleaner;
- Easier and more complete cleaning and removal of peel and bagasse wastes;
- Machine compactness, less complexity and weight, reduction of parts, and reduction of manufacturing costs.

### DESCRIPTION OF THE DRAWINGS

The details of the construction and operation of the invention are set forth below, with the appended drawings disclosing a preferred construction for the machine, which may be altered provided that the scope of the invention is maintained. The Figures are:
**FIG. 1****:** Front perspective view of the machine.
**FIG. 2****:** Rear perspective view of the machine.
**FIG. 3****:** Front view of the machine.
**FIG. 4****:** Side view of the machine.
**FIG. 5****:** Perspective view of front and bottom of the machine.
**FIG. 6****:** Perspective view of the machine in longitudinal cross-section.
**FIG. 7****:** Top perspective view of the machine without the cowling, showing the peelers moving towards each other;
**FIG. 8****:** Top perspective view of the machine without the cowling, showing the peelers starting to engage with each other;
**FIG. 9****:** Top perspective view of the machine without the cowling, showing the peelers fully engaged with each other;
**FIG. 10****:** Perspective view of the machine with the receiving fruit-rack set hinged to the open position.
**FIG. 11****:** Perspective view of the fruit-rack set.
**FIG. 12****:** Side view of the fruit-rack set.
**FIG. 13****:** Top view of the fruit-rack set.
**FIG. 14****:** Front view of the fruit-rack set.
**FIG. 15****:** Rear view of the fruit-rack set.
**FIG. 16****:** Perspective view of the tilting waste basket separated from the machine, yet in the closed use position.
**FIG. 17****:** Side view of the tilting basket separated from the machine, yet in the open use position.
**FIG. 18****:** Side view of the machine with partial cross-sections in the regions of the dispenser/feeder set, fruit-rack and tilting waste basket set in the open position.
**FIG. 19****:** Side view of the machine with partial cross-sections in the regions of the dispenser/feeder set, fruit-rack and tilting waste basket set in the closed position.
**FIG. 20****:** Partial top side cross-section view of the machine with the upper cowling closed and the mobile peeler in the first stage starting position.
**FIG. 21****:** Partial top side cross-section view of the machine with the upper cowling closed and the mobile peeler in the third stage, that is, promoting the peeling of the fruit and the almost simultaneous extraction of the fruit juice.

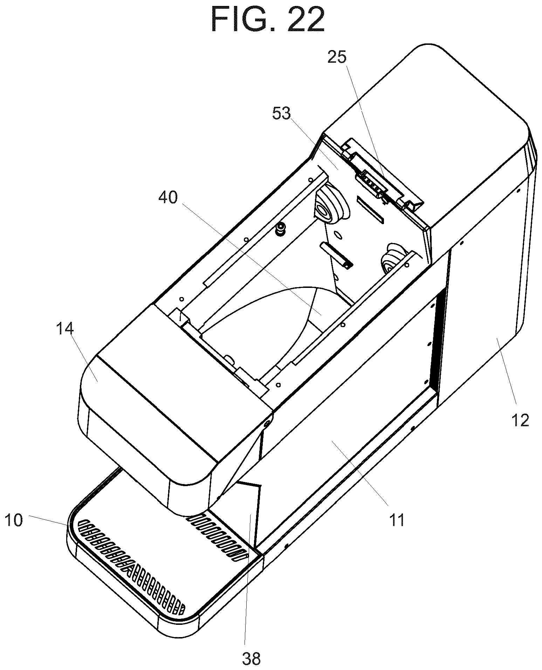

**FIG. 22****:** Top front perspective view of the structural cowling and hinges of the machine.
**FIG. 23****:** Rear perspective view of the structural cowling and hinges of the machine, with details of the filter and piston set and a cross-section view of the tilting waste basket.

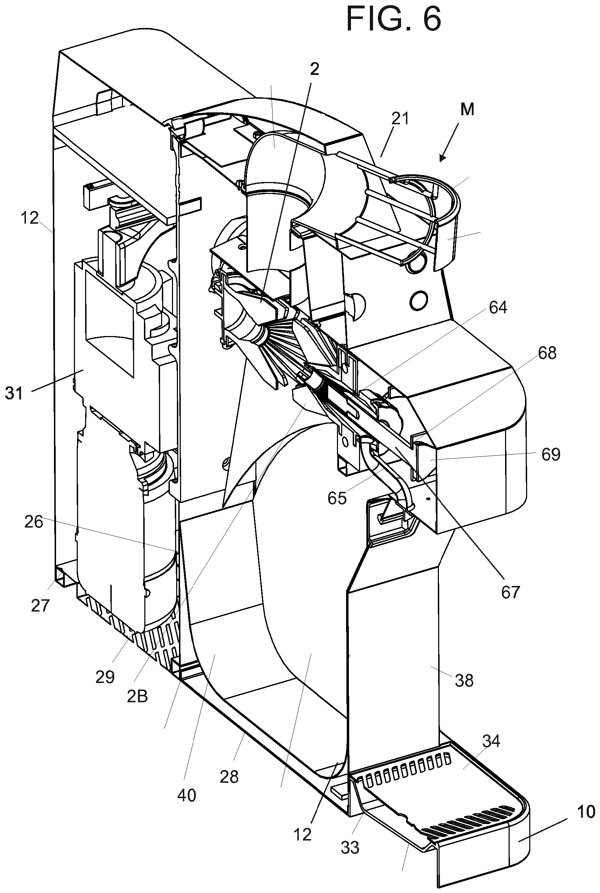

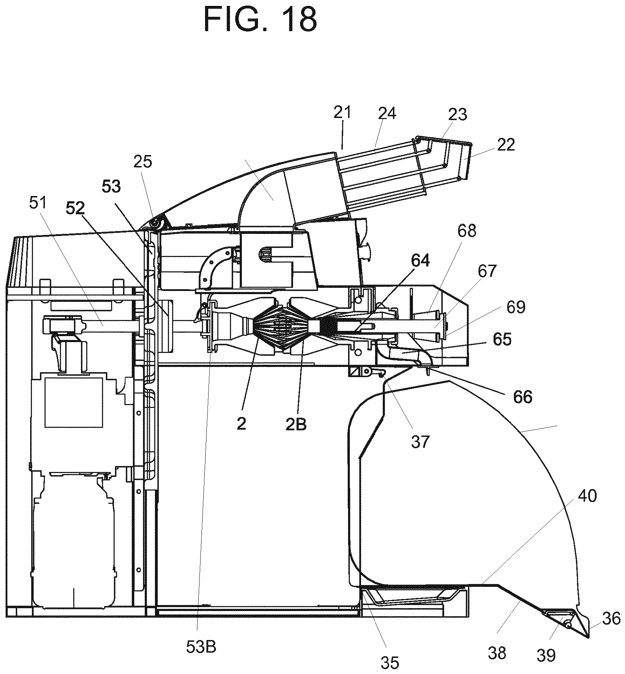

The improvements to a juice extraction machine addressed by this application for a Patent of Invention are improvements to be implemented in a juice extraction machine (M), comprising a fruit-rack set (1) with arched cross-section and whose movement is synchronized with the drive axle of the mobile peeler (2), said fruit-rack (1) being coupled to the mobile peeler set (2) through fittings (3), including in the machine a transverse spring (4) fixed at the bottom of the feeder/dispenser tube (5), said transverse spring (4) whose means of actuation (51) are provided on the fruit-rack set (1); the improved machine (M) comprises a tilting waste basket (7) in its front side, said tilting waste basket (7) having substantially semi-circular sides (8) close to the mobile (2) and fixed (2B) peelers aligned with each other, with the latter being concatenated with the filter and piston set (67), that is mounted inside the fixed peeler (2B) (FIGURES 6, 7 and 18).

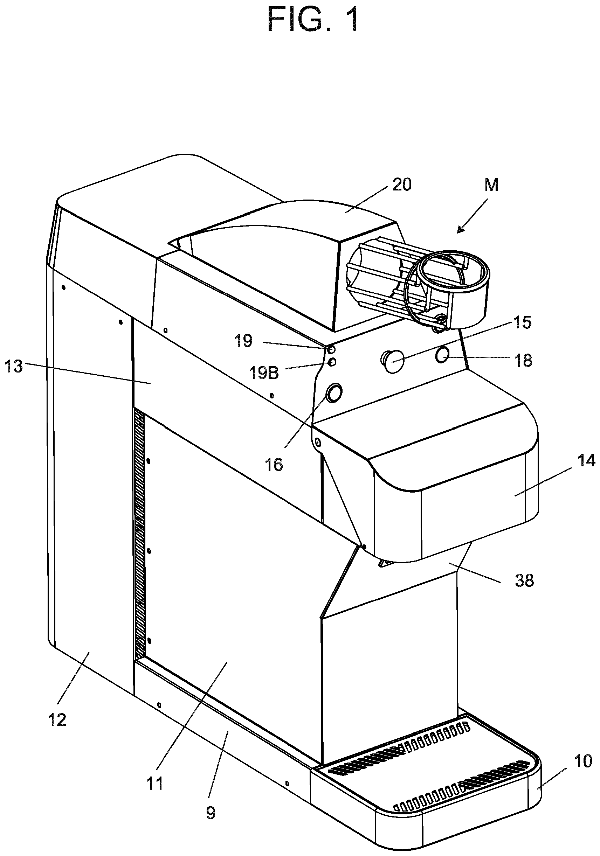

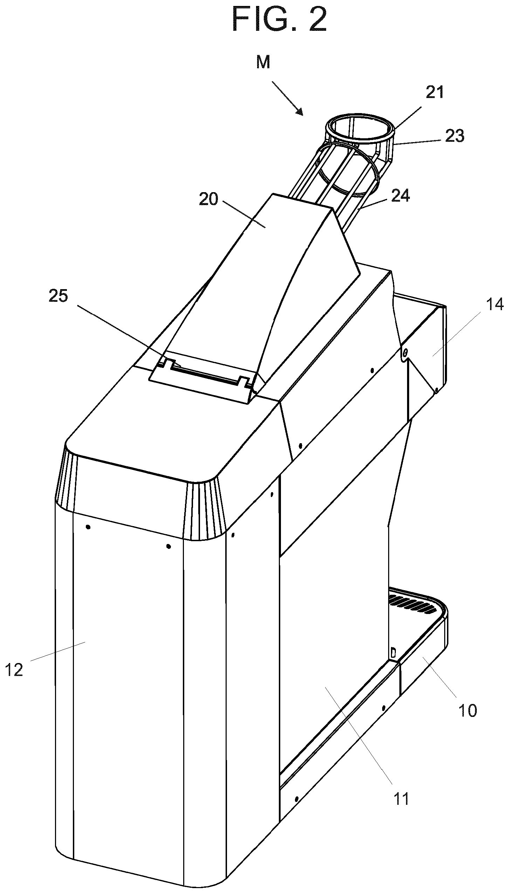

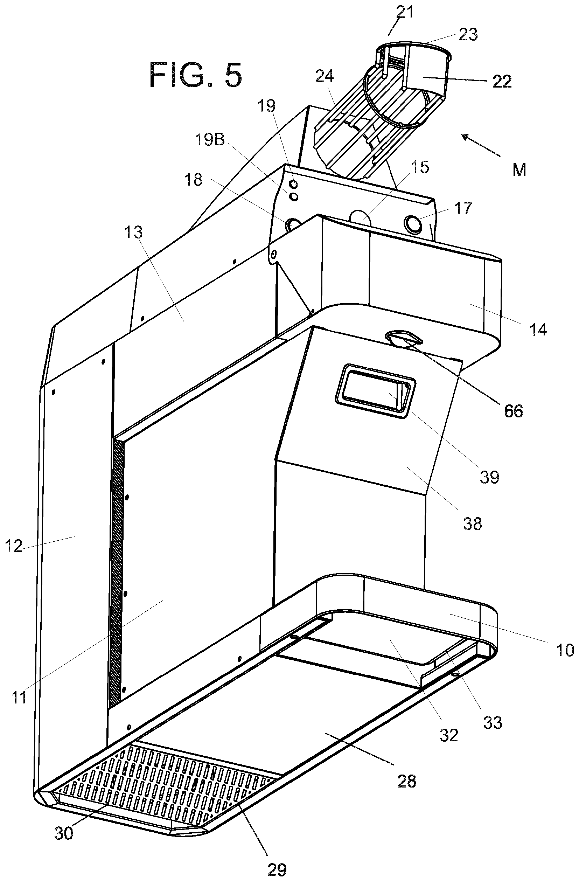

In a preferred and compact construction, the machine (M) presents a flat and leveled support base (9) that is rectangular in the version herein presented, that receives, in its bottom front part, a housing for a drip tray (10), in addition to flat vertical side-cowlings (11), rear vertical cowlings (12), top cowlings (13) that form a top front surface (14) for receiving actuation buttons or displays, one of which is an emergency button (15), a general switch (16), an on-switch (17), an off-switch (18), in addition to LED indicator lights (19) for peels and (19B) open (FIGURES 1, 2 and 5).

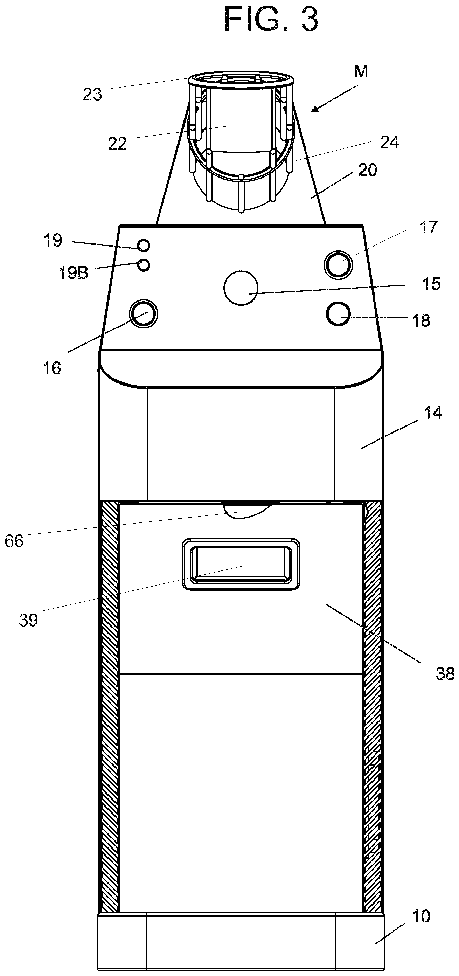

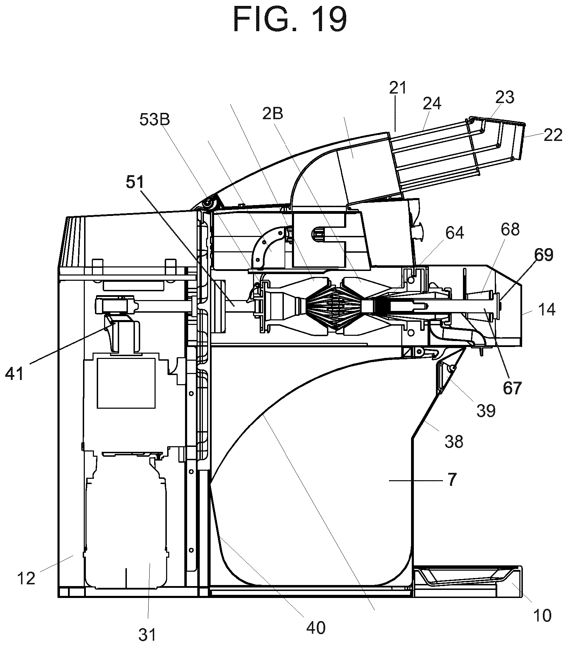

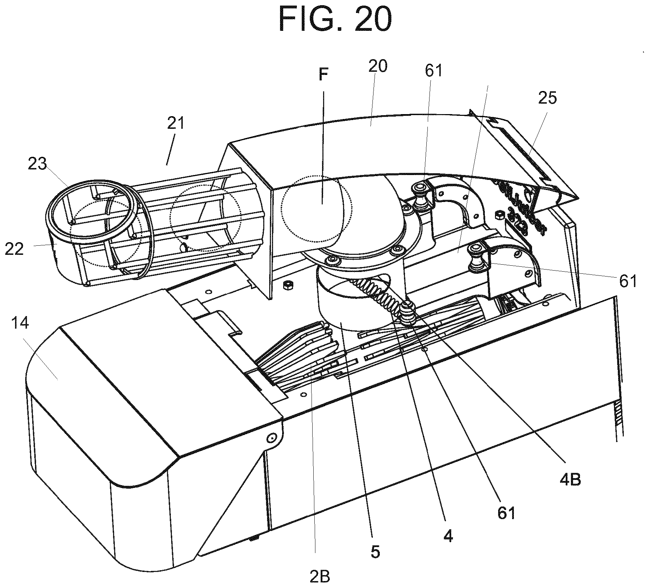

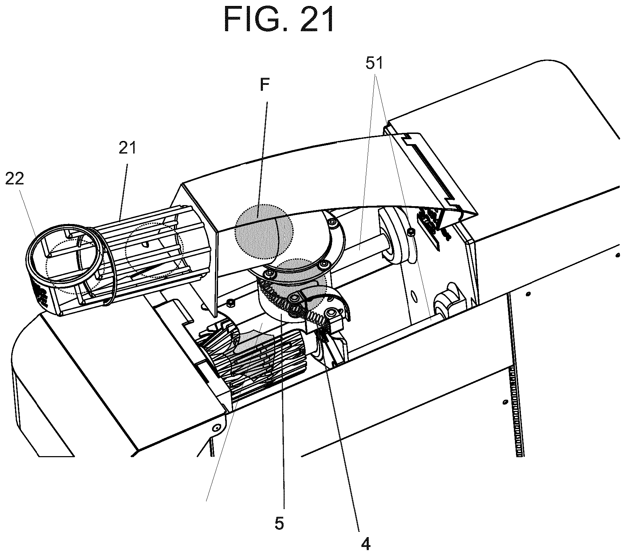

Just above the surface (14) there is a cowling (20) that receives a fruit funnel (21), containing in a front plane a sizer element (22) of the maximum and minimum sizes of fruit, said fruit funnel (21) consisting of a wired element that communicates with the feeder/dispenser (5) inside the machine, with this funnel having an receiving rim (23) and a cylindrical wire conduit (24) projecting towards the inside of the machine, at a slight slant that is sufficient to allow the fruit to move forward through gravity. The electro-electronic part of the machine is a commonplace solution and is not object of this protection, with the components listed for clarification purposes and for allowing a person skilled in the matter to reproduce the product, with a market solution (FIGURES 1, 2, 3, 6, 18, 19, 20 and 21).

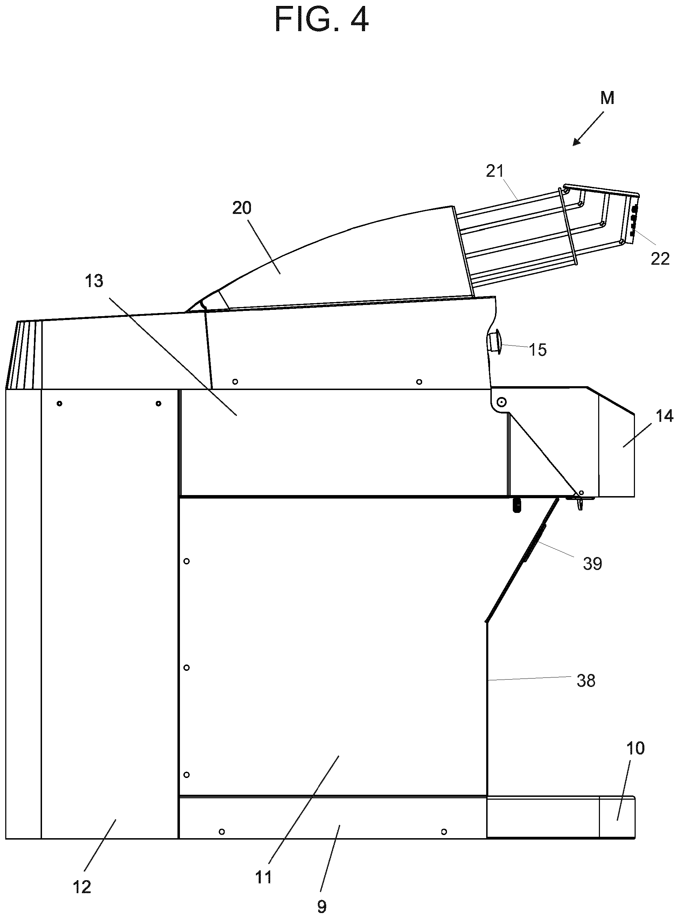

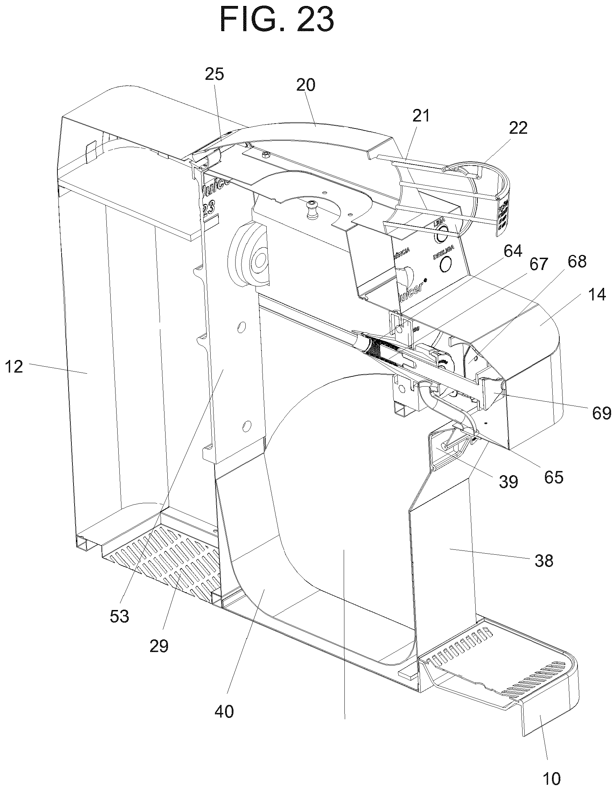

The top cowling (20) has in the rear part thereof an articulation mechanism (25) that moves it into the open or closed position, while internally a metal structure is configured in rectangular sheeting sections (26) that apply to the sides, that are supported on the bottom metal frame (27) of the support base (9), with the latter receiving the sheet metal sections (28), with the rear ones (29) having openings (30) in order to provide a means of ventilation for the gear-motor set (31) that drives the mobile peeler (2) and fruit-rack set (1), while the front section is a solid metal sheet (32) with curved edges (33) attached to the sheet metal structure (26), said solid metal sheet (32) surmounted by a thin metal sheet with front slots (34), above which are the pivot points (35) of the tilting basket (7) whose sides are approximately semicircular (8), with such basket having a free end in flap projected in transversal extension (36) that acts in a spring-pin locking device (37) to keep it latched in the closed position, while the front metal sheet (38) of said basket includes a pulling element (39) made from plastic or similar (FIGURES 4, 5, 6, 18, 19 and 23).

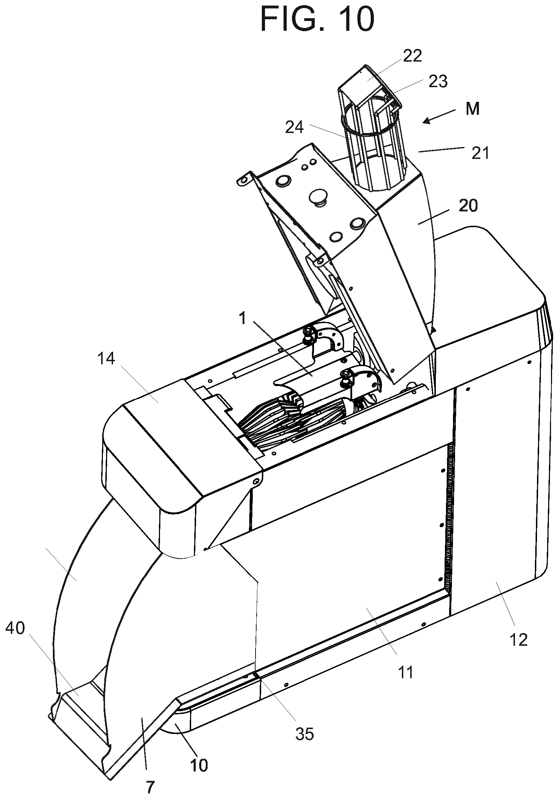

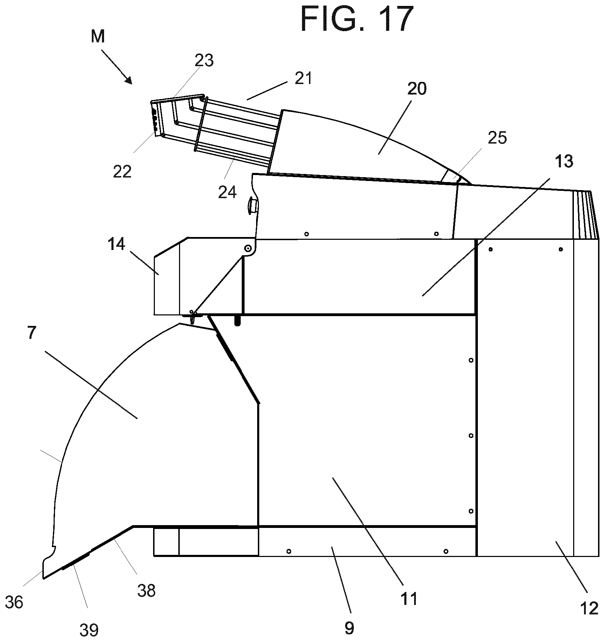

The front metal sheet (38) has an inverted ramp surface (convex) such that when articulated to the open position the tilting basket (7), forms a ramp surface (40) that allows easier waste cleaning (FIGURES 10, 17, 18 and 19).

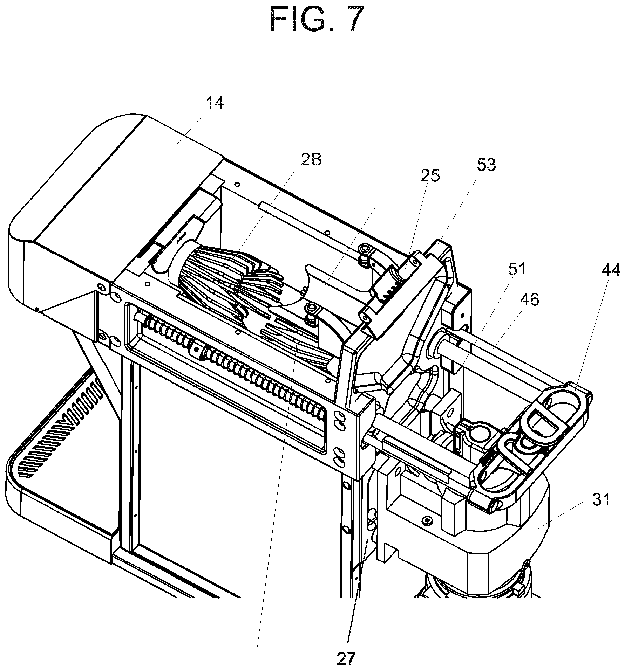

In the rear part of the machine is the gear-motor set (31), which is in turn fixed to the base in sheet metal sections affixed to the structure (27) of the metal base (9) and to the structure in rectangular metal sheet sections (26), this fixation being done by means of screws or other conventional means (FIGURE 6 and 7).

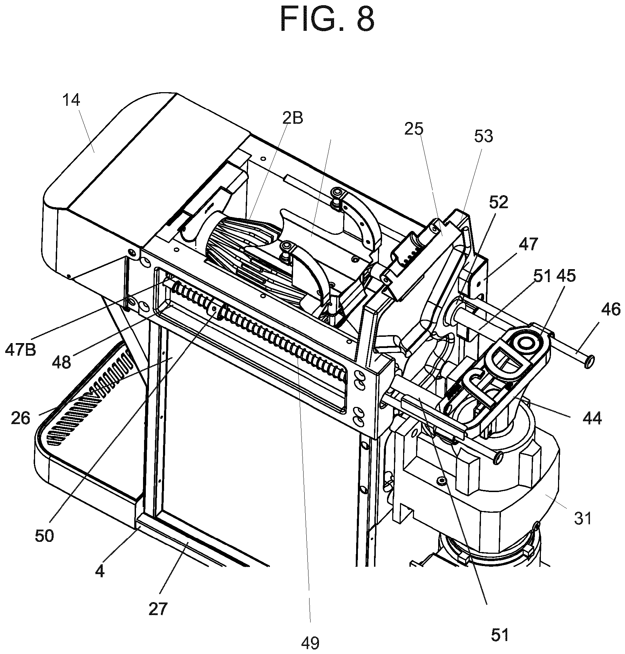

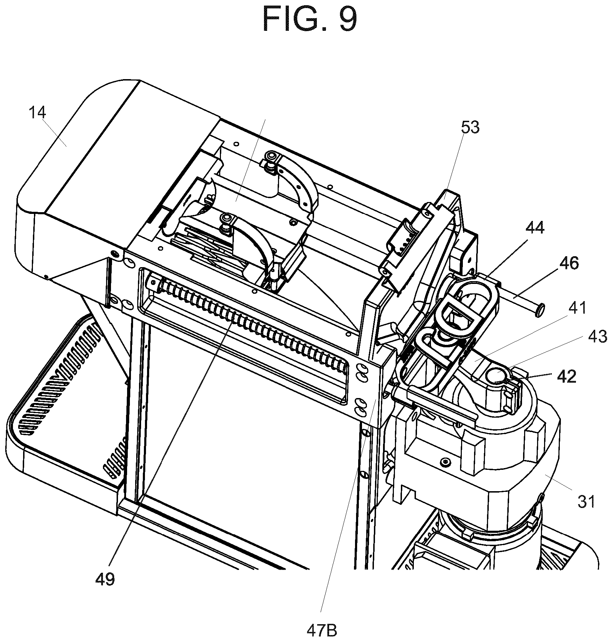

Projecting from the top end of the gear-motor set (31) is a crank arm (41) whose pivotable end (42) couples to an axle (43) with a pulley (45) that in turn operates inside a guide (44) in a transverse position to the machine, with such guide (44) receiving, at the opposite ends, the fitting of opposing cylindrical axles (46) passing through the metal sheet side guides (47) and the guide (44) and supported on the front ends (47B) of the structural part of the machine, said metal sheet side guides (47) having recessed rectangular areas (48) where the helical springs (49) with plastic stoppers (50) act, whose extended linear movements are limited by the recessed rectangular areas (48), thus defining the maximum extension of displacement of said plastic stoppers (50), through converting the rotating movement of the crank arm (41) into the linear movement of the guide (44). The opposing parallel axles (51) of the mobile peeler (2) are coupled to the guide (44), said opposing parallel axles (51) being integrally coupled to the guide (44) and passing through the structure of the machine in bushings (52) incorporated into the structural sheet (53), and with such opposing parallel axles (51) extending to the opposite sides of the mobile peeler (2), where they are attached to the diamond-shaped base (53B) in order to endow the latter with alternating linear to-and-fro movements (FIGURES 8, 9, 18 and 19).

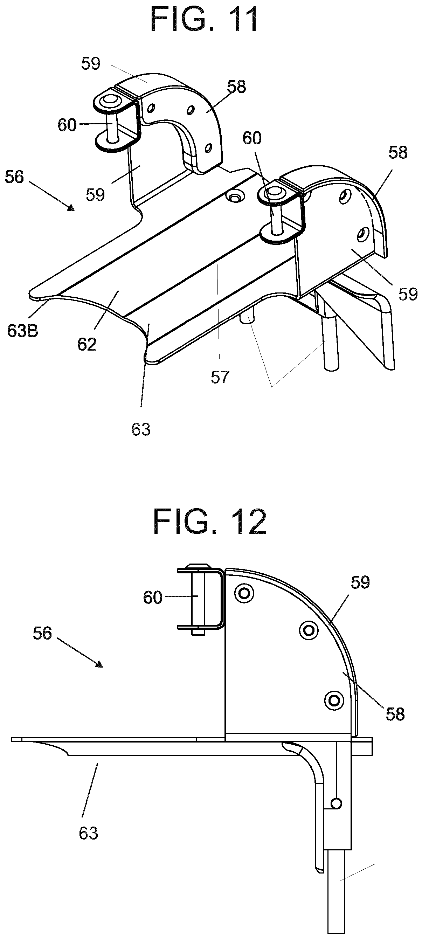

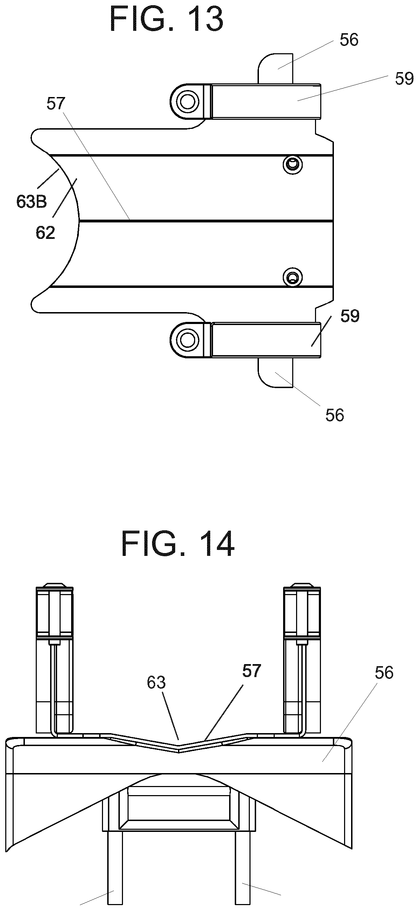

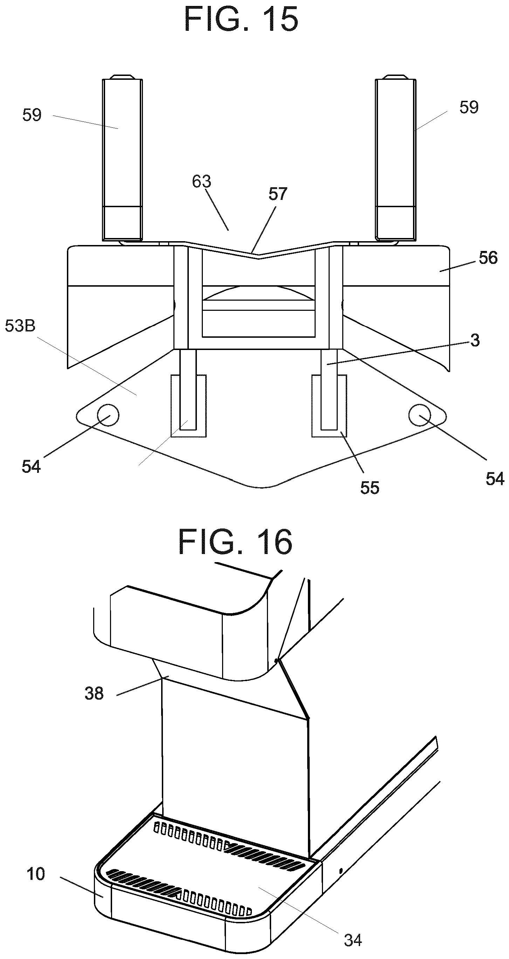

Said substantially diamond-shaped base (53B) has opposing vertices along the largest direction of the diamond with holes (54) for the passage of said axles (51); with said base providing vertical housings (55) that receive the fittings (3) of the fruit-rack set (1), with the latter comprising a base/support (56) provided with a concave arch (57) whose radius is larger than that of the fruit (F) that it will receive, with substantially "C"-shaped arms (58) projecting on both opposite sides from the rear part of such fruit-rack, with internal reinforcement elements (59) whose ends are fitted with substantially "U"-shaped supports that receive axles with pulleys (60) for actuating the helical transverse spring (4) for releasing or retaining the fruit (F) during the operating stages of the machine (M) (FIGURES 11, 12, 13, 14 and 15).

When linearly moved, the substantially "C"-shaped arms (58) with the pulleys (60), adjacent to the mobile peeler set (2) reach the transverse spring (4) that runs through an axial cross-section (4B) of the feeder/dispenser (5), with said transverse spring (4) being supported by the spring supported pulleys (61) parallel and fixed to the sides of the machine casing, releasing the fruit (F) that falls by gravity into the cradle base/support (56); said cradle base/support (56) consists of a smooth surface (62) with an elongated cross-section whose center (63) is slightly recessed into a "V"-shape forming an arch (57) such that it prevents damage to the fruit (F) and favors its slipping; on the front part of the smooth surface (62) is a rounded cut-out (63B) whose linear movement either limits the passage of the fruit or releases it into the next stage (FIGURES 11, 20 and 21).

The filter (64) arranged on the front part of the machine (M) communicates with the inner part of the fixed peeler (2B) and with the "S"-shaped liquid releasing tube (65) through the actuator (66). The fixation of the filter and piston set (67) to the machine (M) is made by a transverse blade (68) affixed to the axles (46) by conventional means and with a front lid (69) capable of being removed when necessary (FIGURES 6, 18 and 19).

According to the invention, with this new machine (M) the fruit (F) goes through three stages, all synchronized by the movement of the mobile peeler (2). In the first stage, the fruit (F) rests on the transverse spring (4), still inside the feeder/dispenser (5); in the second stage, by the contact action of the transverse spring release means (4) during the linear movement of the mobile peeler (2) towards the fixed peeler (2B), the fruit (F) falls on the fruit-rack set (1) being kept above the mobile peeler (2) by the action of the transverse spring (4); in the third stage, the fruit (F) falls between the fixed (2B) and mobile (2) peelers promoting the extraction of the juice. At each new cycle and with the feeder/dispenser (5) full, one fruit (F) remains at each stage.

Most of the components used in the construction of the machine (M) are metals, using stainless steels almost exclusively and conventional manufacturing means such as welds and screws, among others. The other non-metal components are normally polymeric, yet compatible for food usage, with the means of processing being analogously compatible with market technologies.

## Claims

1. A juice extraction machine (M) comprising:
a fixed peeler (2B) and a mobile peeler (2) actuated by a gear-motor set (31) with a crank arm (41), the mobile peeler (2) being interconnected to the gear-motor set (31);
a cowling (20) with a fruit funnel (21) communicating with a feeder-dispenser tube (5) in the machine;
an arched section fruit-rack (1) whose movement is synchronized with a mobile peeler (2) drive axle;
the funnel having a receiving rim (23) and a cylindrical wire conduit (24) at a ramp to allow the fruit to move forward through gravity;
wherein the feeder-dispenser tube (5) includes a transverse spring (4) attached at the bottom of the feeder-dispenser tube (5) for retaining the fruit;
the fruit-rack (1) being positioned on an outer top face of the mobile peeler and arranged to serve as a waiting stage before the fruit falls onto the peelers;
the fruit-rack (1) being attached to the mobile peeler (2) through fittings (3); and wherein the transverse spring is arranged between the feeder dispenser tube and the fruit-rack;
there being spring-release means of actuation (6) of the transverse spring (4), provided on the fruit-rack (1) for releasing the fruit from inside the feeder-dispenser tube to fall on the fruit rack through linear movement of the mobile peeler towards the fixed peeler.

2. The juice extraction machine, according to claim 1, wherein the fruit-rack (1) contains a base-support (56) that has a smooth surface (62) with an elongated cross-section whose center (63) is lowered slightly into a "V"-shape that forms a concave arch (57); on the top part of the smooth surface (62) there is a rounded cut-out (63B).

3. The juice extraction machine, according to claim 1, wherein the transverse spring (4) is a transverse spring that runs through an axial cut-out of the feeder-dispenser tube (5).

4. The juice extraction machine, according to claim 1, wherein the juice extraction machine comprises a tilting waste-basket (7) located close to the mobile peeler (2) and the fixed peeler (2B) wherein the tilting waste-basket (7) comprises semicircular sides (8).

5. The juice extraction machine, according to claims 1 and 4, wherein the tilting waste-basket (7) has a flap projected from transversal extension (36) that acts in a spring-pin locking device (37) to keep it latched in the closed position, while a front metal sheet (38) of said tilting waste-basket includes a pulling element (39).

6. The juice extraction machine, according to claims 1 and 5, wherein the front metal sheet (38) surface has an inverted ramp that forms a ramp surface (40) when the tilting waste-basket (7) is in the open position.

7. The juice extraction machine, according to claim 1, comprising a gear-motor -set (31) on the back of the machine, which is attached to a base of sheet metal sections fixed to a structure (27) of a metal base (9) and to a rectangular sheeting sections structure (26).

8. The juice extraction machine, according to claims 1 and 7, comprising a crank arm (41) projecting from an upper end of the gear-motor set (31) whose pivotable end (42) is connected to an axle (43) with a pulley (45) that operates inside a guide (44) in a transverse position to the machine, with such guide (44) receiving at the opposite ends the fitting of the opposing cylindrical axles (46) passing through the side metal sheet guides (47) and the guide (44) and supported on the front ends (47b) of the structural part of the machine, with such metal sheet side guides (47) having recessed rectangular areas (48) where helical springs (49) with plastic stoppers (50) act, whose extended linear movements are limited by a recessed rectangular area(48); coupled to the guide (44) are the opposing parallel axles (51) of the mobile peeler (2), with the opposing parallel axles (51) being fully attached to the guide (44) and running through the structure of the machine on bushings (52) incorporated into a structural metal sheet (53), with such opposing parallel axles (51) extending to the opposite sides of the mobile peeler (2), where they are attached to a diamond-shaped base (53b).

9. The juice extraction machine, according to claims 1 and 8, wherein the diamond-shaped base (53b) comprises opposing vertices along the largest direction of the diamond shape with holes (54) for the passage of said opposing parallel axles (51); with said base providing vertical housings (55) that receive the fittings (3) of the fruit-rack (1), with the latter comprising a base-support (56) that is arched (57) with a radius being larger than that of the fruit (f) that it will receive, with substantially "c"-shaped arms (58) projecting from its rear on opposite sides with internal reinforcement elements (59) whose ends are fitted with substantially "u"-shaped supports that receive the axles with pulleys (60) for actuating the helical transverse spring (4).

10. The juice extraction machine, according to claims 1 and 9, comprising substantially "c"-shaped arms (58) with the pulleys (60) adjacent the mobile peeler set (2), working with the transverse-spring (4) that runs through the axial cut-out (4b) of the feeder-dispenser tube (5), with said transverse-spring (4) being supported by the spring supported pulleys (61) parallel and fixed to the sides of the machine casing in the region above the base-support (56).

11. The juice extraction machine, according to claim 1, comprising a filter (64) arranged on the front part of the machine (m), communicating with the inner part of the fixed peeler (2b) and with a "s"-shaped liquid released tube (65) that releases the liquid juice through the actuator (66), forming a filter and piston sub-set (67).

12. The juice extraction machine, according to claims 1 and 11, comprising a filter and piston set (67) assembled inside the fixed peeler (2b) and the machine (m), consisting of a transverse-blade (68) attached to the axles (46) and with a removable front lid (69).

## Patentansprüche

1. Eine Entsaftermaschine (M), umfassend:
eine feststehende Schälvorrichtung (2B) und eine bewegliche Schälvorrichtung (2), die von einer Getriebemotoreinheit (31) mit einem Antriebshebel (41) angetrieben wird, wobei die bewegliche Schälvorrichtung (2) mit der Getriebemotoreinheit (31) verbunden ist;
eine Haube (20) mit einem Fruchttrichter (21), der mit einem Zufuhr- und Ausgaberohr (5) in der Maschine verbunden ist;
eine bogenförmige Fruchtschiene (1), deren Bewegung mit der Antriebsachse einer beweglichen Schälvorrichtung (2) synchronisiert ist;
wobei der Trichter einen Aufnahmekranz (23) und einen zylindrischen Drahtkanal (24) auf einer geneigten Ebene aufweist, um die Früchte durch die Schwerkraft vorwärtszubefördern;
wobei das Zufuhr- und Ausgaberohr (5) eine Querfeder (4) umfasst, die am Boden des Zufuhr- und Ausgaberohrs (5) angebracht ist, um die Frucht zurückzuhalten;
wobei die Fruchtschiene (1) an einer äußeren Oberseite der mobilen Schälvorrichtung positioniert und so angeordnet ist, dass sie als Wartestufe dient, bevor die Frucht auf die Schälvorrichtungen fällt;
wobei die Fruchtschiene (1) durch Verbindungsstücke (3) an der beweglichen Schälvorrichtung (2) befestigt ist; und wobei die Querfeder zwischen dem Zufuhr- und Ausgaberohr und der Fruchtschiene angeordnet ist;
wobei eine Einrichtung zur Freigabe der Feder (6) zum Betätigen der an der Fruchtschiene (1) angebrachten Querfeder (4) angebracht ist, um die Frucht aus dem Inneren des Zufuhr- und Ausgaberohrs freizugeben, damit sie durch eine lineare Bewegung der beweglichen Schälvorrichtung in Richtung des feststehenden Schälvorrichtung auf die Fruchtschiene fällt.

2. Die Entsaftermaschine nach Anspruch 1, wobei die Fruchtschiene (1) einen Basisträger (56) umfasst, der eine glatte Oberfläche (62) mit einem länglichen Querschnitt umfasst, dessen Mitte (63) leicht zu einer "V"-Form abgesenkt ist, die einen konkaven Bogen (57) bildet; wobei sich am oberen Teil der glatten Oberfläche (62) ein abgerundeter Ausschnitt (63B) befindet.

3. Die Entsaftermaschine nach Anspruch 1, wobei die Querfeder (4) eine Querfeder ist, die durch eine axiale Aussparung des Zufuhr- und Ausgaberohrs (5) verläuft.

4. Die Entsaftermaschine nach Anspruch 1, wobei die Entsaftermaschine einen kippbaren Abfallbehälter (7) umfasst, der in der Nähe der beweglichen Schälvorrichtung (2) und der feststehenden Schälvorrichtung (2B) angeordnet ist, wobei der kippbare Abfallbehälter (7) halbkreisförmig ausgebildete Seiten (8) aufweist.

5. Die Entsaftermaschine nach den Ansprüchen 1 und 4, wobei der kippbare Abfallbehälter (7) eine Klappe aufweist, die von der Querverlängerung (36) vorsteht und in eine Verriegelungsvorrichtung mit Federstift (37) eingreift, um diese in der geschlossenen Position verriegelt zu halten, während ein vorderes Blech (38) des genannten kippbaren Abfallbehälters ein Zugelement (39) aufweist.

6. Die Entsaftermaschine nach den Ansprüchen 1 und 5, wobei die Oberfläche des vorderen Blechs (38) eine umgekehrt geneigte Ebene aufweist, die eine Oberfläche einer geneigten Ebene (40) bildet, wenn sich der kippbare Abfallbehälter (7) in der geöffneten Position befindet.

7. Die Entsaftermaschine nach Anspruch 1, umfassend eine Getriebemotoreinheit (31) auf der Rückseite der Maschine, die an einer Basis aus Blechprofilen befestigt ist, die an einer Struktur (27) einer Metallbasis (9) und an einer Struktur aus rechteckigen Blechprofilen (26) angebracht sind.

8. Die Entsaftermaschine nach den Ansprüchen 1 und 7, umfassend einen Antriebshebel (41), der von einem oberen Ende der Getriebemotoreinheit (31) vorsteht und dessen schwenkbares Ende (42) mit einer Achse (43) mit einer Rolle (45) verbunden ist, die in einer Führung (44) quer zur Maschine arbeitet, wobei diese Führung (44) an den gegenüberliegenden Enden den Sitz der gegenüberliegenden zylindrischen Achsen (46) aufnimmt, die durch die seitlichen Blechführungen (47) und die Führung (44) hindurchgehen und von den vorderen Enden (47b) des strukturellen Teils der Maschine gehalten werden, wobei die seitlichen Blechführungen (47) Bereiche mit rechteckigen Vertiefungen (48) aufweisen, in denen Schraubenfedern (49) mit Kunststoffanschlägen (50) wirken, deren verlängerte lineare Bewegungen durch einen vertieften rechteckigen Bereich (48) begrenzt sind; und mit der Führung (44) der gegenüberliegenden parallelen Achsen (51) der beweglichen Schälvorrichtung (2) gekoppelt sind, wobei die so gegenüberliegenden parallelen Achsen (51) vollständig an der Führung (44) befestigt sind und durch die Struktur der Maschine auf Buchsen (52) laufen, die in ein Strukturblech (53) eingearbeitet sind, wobei sich solche gegenüberliegenden parallelen Achsen (51) zu den gegenüberliegenden Seiten der beweglichen Schälvorrichtung (2) erstrecken, wo sie an einer rautenförmigen Basis (53b) befestigt sind.

9. Die Entsaftermaschine nach den Ansprüchen 1 und 8, wobei die rautenförmige Basis (53b) gegenüberliegende Scheitelpunkte entlang der breitesten Richtung der Rautenform mit Öffnungen (54) für den Durchgang der genannten gegenüberliegenden parallelen Achsen (51) aufweist; wobei die genannte Basis vertikale Gehäuse (55) aufweist, die die Verbindungsstücke (3) der Fruchtschiene (1) aufnehmen, wobei letztere einen gebogenen (57) Basisträger (56) mit einem Radius, der größer ist als der Radius der aufzunehmenden Frucht (f) mit im wesentlichen "C"-förmigen Armen (58) aufweist, die von der Rückseite auf gegenüberliegenden Seiten mit inneren Verstärkungselementen (59) hervorstehen, deren Enden mit im wesentlichen "U"-förmigen Trägern versehen sind, welche die Rollenachsen (60) zur Betätigung der Querfeder (4) aufnehmen.

10. Die Entsaftermaschine nach den Ansprüchen 1 und 9, mit im wesentlichen "C"-förmigen Armen (58) mit Rollen (60) neben der beweglichen Schälvorrichtung (2), die mit der Querfeder (4) zusammenwirken, die durch den axialen Ausschnitt (4b) des Zufuhr- und Abgaberohrs (5) verläuft, wobei die genannte Querfeder (4) von federgelagerten Rollen (61) gehalten wird und parallel zu den Seiten des Maschinengehäuses im Bereich oberhalb des Basisträgers (56) befestigt ist.

11. Die Entsaftermaschine nach Anspruch 1, umfassend einen Filter (64), der an der Vorderseite der Maschine (m) angeordnet ist und mit dem inneren Teil der feststehenden Schälvorrichtung (2b) und mit einem "S"-förmigen Flüssigkeitsabgaberohr (65) verbunden ist, das den flüssigen Saft durch den Aktuator (66) abgibt und eine Filter- und Kolbenuntergruppe (67) bildet.

12. Die Entsaftermaschine nach den Ansprüchen 1 und 11, mit einer Filter- und Kolbenanordnung (67), die im Inneren der feststehenden Schälvorrichtung (2b) und der Maschine (m) angebracht ist und aus einer an den Achsen (46) befestigten Querplatte (68) mit abnehmbarem Frontdeckel (69) besteht.

## Revendications

1. Une machine d'extraction de jus (M) comprenant :
un éplucheur fixe (2B) et un éplucheur mobile (2) actionnés par un ensemble engrenage-moteur (31) avec un bras de manivelle (41), l'éplucheur mobile (2) étant interconnecté à l'ensemble engrenage-moteur (31) ;
un capot (20) avec un entonnoir à fruits (21) communiquant avec un tube d'alimentation-distribution (5) dans la machine ;
un support à fruit à section cintrée (1) dont les mouvements sont synchronisés avec un essieu moteur d'éplucheur mobile (2) ;
l'entonnoir ayant un bord récepteur (23) et un conduit à câbles cylindrique (24) incliné pour permettre au fruit d'avancer à l'aide de la gravité ;
dans laquelle le tube d'alimentation-distribution (5) inclut un ressort transversal (4) attaché au fond du tube d'alimentation-distribution (5) pour retenir le fruit ;
le support à fruit (1) étant positionné sur une face supérieure externe de l'éplucheur mobile et disposé pour servir de phase d'attente avant que le fruit tombe dans les éplucheurs ;
le support à fruit (1) étant attaché à l'éplucheur mobile (2) à l'aide de raccords (3) ; et dans lequel le ressort transversal est disposé entre le tube distributeur d'alimentation et le support à fruit ;
des moyens d'actionnement par libération (6) du ressort transversal (4) étant présents sur le support à fruit (1) pour libérer le fruit de l'intérieur du tube d'alimentation-distribution pour qu'il tombe sur le support à fruit à travers un mouvement linéaire de l'éplucheur mobile vers l'éplucheur fixe.

2. La machine d'extraction de jus, selon la revendication 1, dans laquelle le support à fruit (1) contient un support de base (56) qui a une surface lisse (62) avec une section transversale allongée dont le centre (63) est légèrement abaissé en forme de « V » qui forme une arche concave (57) ; sur la partie supérieure de la surface lisse (62) il y a une découpe arrondie (63B).

3. La machine d'extraction de jus, selon la revendication 1, dans laquelle le ressort transversal (4) est un ressort transversal qui traverse une découpe axiale du tube d'alimentation-distribution (5).

4. La machine d'extraction de jus, selon la revendication 1, dans laquelle la machine d'extraction de jus comprend une corbeille basculante (7) située près de l'éplucheur mobile (2) et de l'éplucheur fixe (2B) dans laquelle la corbeille basculante (7) comprend des côtés semi-circulaires (8).

5. La machine d'extraction de jus, selon les revendications 1 et 4, dans laquelle la corbeille basculante (7) a un clapet partant de l'extension transversale (36) qui agit sur un dispositif de verrouillage à goupille à ressort (37) pour la maintenir encliquetée en position fermée, pendant qu'une plaque métallique frontale (38) de ladite corbeille basculante inclut un élément de traction (39).

6. La machine d'extraction de jus, selon les revendications 1 et 5, dans laquelle la surface de la plaque métallique frontale (38) a une rampe inversée qui forme une surface de rampe (40) lorsque la corbeille basculante (7) est en position ouverte.

7. La machine d'extraction de jus, selon la revendication 1, comprenant un ensemble engrenage-moteur (31) à l'arrière de la machine, qui est attaché à une base de sections de plaques métalliques fixées à une structure (27) d'une base métallique (9) et à une structure de sections de plaques rectangulaire (26).

8. La machine d'extraction de jus, selon les revendications 1 et 7, comprenant un bras à manivelle (41) partant d'une extrémité supérieure de l'ensemble engrenage-moteur (31) dont l'extrémité pivotante (42) est reliée à un essieu (43) avec une poulie (45) qui fonctionne à l'intérieur d'un guide (44) dans une position transversale à la machine, ledit guide (44) recevant dans les extrémités opposés le raccord des essieux cylindriques opposés (46) traversant les guides de plaque métallique latéraux (47) et le guide (44), et étant soutenu au niveau des extrémités frontales (47b) de la partie structurelle de la machine, lesdits guides de plaque métallique latéraux (47) ayant des zones rectangulaires renfoncées (48) où des ressorts hélicoïdaux (49) avec des bouchons en plastique (50) sont en fonctionnement, leurs mouvements linéaires étendus étant limités par une zone rectangulaire renfoncée (48) ; les essieux parallèles opposés (51) de l'éplucheur mobile (2) sont accouplés au guide (44), les essieux parallèles opposés (51) étant complètement attachés au guide (44) et traversant la structure de la machine sur des bagues (52) incorporées dans une plaque métallique structurelle (53), lesdits essieux parallèles opposés (51) s'étendant jusqu'aux côtés opposés de l'éplucheur mobile (2), où ils sont attachés à une base en forme de diamant (53b).

9. La machine d'extraction de jus, selon les revendications 1 et 8, dans laquelle la base en forme de diamant (53b) comprend des sommets opposés le long de la direction la plus large de la forme en diamant avec des trous (54) pour laisser passer lesdits essieux parallèles opposés (51) ; ladite base étant pourvue de compartiments verticaux (55) qui reçoivent les raccords (3) du support à fruit (1), ce dernier comprenant un support de base (56) qui est cintré (57) avec un rayon supérieur à celui du fruit (f) qu'il va recevoir, avec des bras substantiellement en forme de « C » (58) partant de son arrière sur des côtés opposés avec des éléments de renfort internes (59) dont les extrémités sont raccordées à des supports substantiellement en forme de « U » qui reçoivent les essieux avec poulies (60) pour actionner le ressort transversal hélicoïdal (4).

10. La machine d'extraction de jus, selon les revendications 1 et 9, comprenant des bras substantiellement en forme de « C » (58) avec les poulies (60) adjacentes à l'ensemble d'éplucheur mobile (2), fonctionnant avec le ressort transversal (4) qui traverse la découpe axiale (4b) du tube d'alimentation-distribution (5), ledit ressort transversal (4) étant soutenu par les poulies soutenues par ressort (61) parallèles et fixées aux côtés du carter de la machine dans la zone au-dessus du support de base (56).

11. La machine d'extraction de jus, selon la revendication 1, comprenant un filtre (64) disposé sur la partie avant de la machine (m), communiquant avec la partie interne de l'éplucheur fixe (2b) et ayant un tube de libération de liquide en forme de « S » (65) qui libère le jus liquide à travers l'actionneur (66), formant un sous-ensemble de filtre et piston (67).

12. La machine d'extraction de jus, selon les revendications 1 et 11, comprenant un ensemble filtre et piston (67) assemblé à l'intérieur de l'éplucheur fixe (2b) et de la machine (m), consistant en une lame transversale (68) attachée aux essieux (46) et avec un couvercle frontal amovible (69).
